# EUROPÄISCHE PATENTANMELDUNG

(11) **EP 1 837 957 A2**
(43) Veröffentlichungstag der Anmeldung: **26.09.2007**
(21) Anmeldenummer: 07004297.3
(22) Anmeldetag: 02.03.2007
(51) Int. Cl.: H01R 13/625

(54) **Bajonettverschluss mit Selbstkontaktierung**

(30) Priorität: 25.03.2006 DE 202006004768 U
(71) Anmelder: Tehalit GmbH, 67716 Heltersberg (DE)
(72) Erfinder: Eberle, Patrick, 66292 Riegelsberg (DE)
(74) Vertreter: Patentanwälte Möll und Bitterich

(57) **Zusammenfassung**

Die vorliegende Erfindung betrifft einen Bajonettverschluss mit Selbstkontaktierung, der aus einem Bajonettsockel (10) und einem Bajonettfuß (20) besteht. Der Bajonettsockel (10) enthält einen Nockenring (14) mit seitlich herausstehenden Nocken (12), wobei die Nocken (12) in korrespondierende, seitlich angebrachte Führungsschlitze (24) eines Bajonettfußes (20) greifen, sowie einer im Bajonettsockel (10) eingefassten Aufnahmeplatte (16). Der Bajonettfuß (20) besteht aus einem Bajonettring (22) mit darin eingefassten seitlichen Führungsschlitzen (24), die zum Einrasten der Nocken (12) des Bajonettsockels (10) zunächst einen steilen und später in Richtung ihrer Erweiterung flachen Verlauf aufweisen. Die Aufnahmeplatte (16) des Bajonettsockels (10) enthält eine erste Kontaktleiste (17) mit Steckkontakten (18) und in dem Bajonettfuß (20) befindet sich eine zweite Kontaktleiste (23) mit Steckbuchsen (25). Eine der beiden Kontaktleisten (17, 23) ist drehbar im Bajonettsockel (10) bzw. Bajonettfuß (20) eingefasst oder mit diesen fest verbunden, wobei dann entweder die erste Kontaktleiste (17) oder die zweite Kontaktleiste (23) mit drehbaren Steckkontakten (18, 25) versehen ist, so dass beim Aufsetzen des Bajonettfußes (20) auf den Bajonettsockel (10) ein elektrischer Drehkontakt entsteht.

## Beschreibung

Die vorliegende Erfindung betrifft einen Bajonettverschluss mit einer elektrischen Selbstkontaktierung gemäß dem Oberbegriff des Anspruchs 1.

Bajonettverschlüsse werden in den unterschiedlichsten Bereichen zum Verbinden zweier Teile eingesetzt. Sie finden beispielsweise Verwendung bei Behältern wie Flaschen, Kameraobjektiven, Lampen und elektrischen Steckkupplungen.

DE 27 28 133 U1 beschreibt einen Bajonettverschluss zum lösbaren Verbinden zweier Teile, wobei das eine Teil zumindest zwei einander gegenüberliegende, flanschartige Ansätze und das zu fügende andere Teil entsprechende Ausnehmungen aufweist, in die die flanschartigen Ansätze eingreifen. Ein Teil des Bajonettverschlusses besitzt Rastkerben, in die auf dem zu fügenden Teil entsprechende Rastnocken eingreifen.

DE 573 806 B beschreibt einen Bajonettverschluss für elektrische Steckkupplungen mit einer oder mehreren in einer Kupplungshälfte untergebrachten Führungsbahnen zur Führung einer oder mehrerer in der Kupplungsgegenhälfte vorhandener Stifte. Durch die schräg abfallende Führungsschiene ist ein Öffnen bzw. Verschließen der Verbindung mit wenig Kraftaufwand und Materialverschleiß möglich.

DE 573 806 B beschreibt eine Unterputzabzweigdose für elektrische Leitungen mit Bajonettverschluss für den Deckel. Die Abzweigdose besteht aus einem Metallmantel mit einer nach innen gerichteten Sicke mit Aussparungen für einen Deckelbajonettlappen.

DE 37 26 386 A1 beschreibt eine schnell trennbare elektrische Steck-Verbindungskupplung mit einer Steckeranordnung, die eine Steckaufnahme umschließt und in diese aufgenommen wird. Die zylindrische Steckeraufnahme (Steckdose) besteht aus einer Anzahl von an der Außenseite des Steckeraufnahmegehäuses angeordneten festen Bajonettstiften, die in Ausschnitte eines Kupplungsringes greifen. Die elektrische Steckverbindung erfolgt bei dieser Konstruktion manuell mit der Hand.

Die oben beschriebenen Bajonettverschlüsse für elektrische Steckverbindungen haben den Nachteil, dass die mechanische und elektrische Verbindung in zwei Schritten durchgeführt werden muss. Zunächst wird ein Bajonettfuß auf einen Bajonettsockel aufgesetzt. Der Bajonettfuß oder der Bajonettsockel besitzt herausstehende Stifte oder Nocken, die in die jeweiligen flach abfallenden Schlitze des Gegenstückes greifen. Durch eine Drehbewegung werden die beiden zu verbindenden Teile schließlich miteinander verbunden.

Dann müssen die elektrischen Kontakte hergestellt werden. Dazu müssen die elektrischen Steckverbindungen manuell mit der Hand zusammengesteckt werden. Je nach Größe und Anzahl der Steckkontakte kann das Anschließen der elektrischen Steckkontakte sehr aufwendig sein.

Der vorliegenden Erfindung liegt daher die Aufgabe zugrunde, einen Bajonettverschluss für elektrische Steckkontakte bereitzustellen, bei dem gleichzeitig eine mechanische und elektrische Verbindung beim Aufsetzen des Bajonettfußes auf einen Bajonettsockel hergestellt wird.

Diese Aufgabe wird gelöst durch einen Bajonettverschluss mit den Merkmalen des Anspruchs 1.

Der erfindungsgemäße Bajonettverschluss besteht aus einem Bajonettsockel, an dessen Außenmantel einzelne Nocken angebracht sind. Für die elektrische Kontaktierung befindet sich in dem Bajonettsockel eine erste Kontaktleiste mit Steckbuchsen. Auf den Bajonettsockel wird ein Bajonettfuß aufgeschoben, so dass die seitlichen Nocken des Bajonettsockels in die dafür vorgesehenen seitlichen Führungsschlitze des Bajonettfußes greifen. Diese weisen zunächst einen steilen und später in Richtung ihrer Erweiterung flachen Verlauf auf.

Dadurch können die Nocken mit geringem Kraftaufwand in die Führungsschlitze geleitet werden und schließlich in ihrer Endposition beim Eindrehen des Bajonettfußes einrasten.

Das Gegenstück zu den Steckbuchsen des Bajonettsockels befindet sich in einer zweiten Kontaktleiste im Bajonettfuß. Beim Aufsetzen des Bajonettfußes auf den Bajonettsockel greifen die Stecker in die jeweiligen Buchsen. Damit beim Eindrehen des Bajonettfußes die Steckkontakte erhalten bleiben, wird eine der beiden Kontaktleisten drehbar gemacht. Auf diese Weise drehen sich die Kontaktleisten entsprechend der Drehung des Bajonettfußes beim Einrasten mit. Eine Feder dreht die bewegliche Kontaktleiste in die Grundstellung zurück. Dabei definiert der Anschlag die Grundstellung.

In einer anderen Ausführungsform sind die beiden Kontaktleisten im Bajonettsockel bzw. -fuß fest integriert. In diesem Fall sind in den Steckbuchsen Drehkontakte enthalten, die ein Drehen der Stecker in den Buchsen ermöglichen.

Es ist nicht notwendig, daß sich die Nocken am Bajonettsockel und die Führungsschlitze am Bajonettfuß befinden. Für einen Bajonettverschluss können die Nocken auch am Bajonettfuß und die Führungsschlitze am Bajonettsockel angebracht sein.

Der erfindungsgemäße Bajonettverschluss hat den Vorteil, dass beim Aufsetzen und Eindrehen des Bajonettfußes auf den Bajonettsockel mit der mechanischen Arretierung gleichzeitig eine elektrische Kontaktierung hergestellt wird. Auf diese Weise wird beispielsweise ein Elektroinstallationsgerät mit den Kabeln und Leitungen einer Bodenauslassdose verbunden. Nachträgliche Installationsmaßnahmen sind nicht mehr notwendig. Dies ist insbesondere bei sehr kleinen Bodenauslassdosen und Steckverbindungen vorteilhaft. Vorzugsweise sind deshalb die Steckverbindungen unter Last und Spannung steck- und trennbar.

Der Bajonettfuß kann beispielsweise an einer Raumsäule angebracht sein. Eine solche Raumsäule enthält mehrere Elektroninstallationsgeräte wie Steckbuchsen oder Netzwerkanschlüsse, um einen Einzelarbeitsplatz mit im Boden verlaufenden Energie- und Datenleitungen zu versorgen. Die Raumsäule kann auf den Bajonettsockel aufgeschoben und durch leichtes Drehen eingerastet werden. Damit ist die Raumsäule direkt an das Versorgungs- und Leitungsnetzwerk im Boden angeschlossen.

Ein weiterer Vorteil ist, dass der Bajonettverschluss leicht gelöst werden kann, ohne dass die elektrischen Steckkontakte vorher gelöst werden müssen. Der Bajonettfuß wird einfach aus dem Bajonettsockel herausgedreht. Dabei werden auch die Steckkontakte gelöst.

Anhand der vorliegenden Zeichnungen soll die Erfindung in Form von speziellen Ausführungsbeispielen näher erläutert werden. Es zeigen
- Fig. 1: einen Bajonettsockel in Draufsicht,
- Fig. 2: einen Bajonettfuß,
- Fig. 3: einen Bajonettfuß, der an einer Raumsäule angebracht ist.

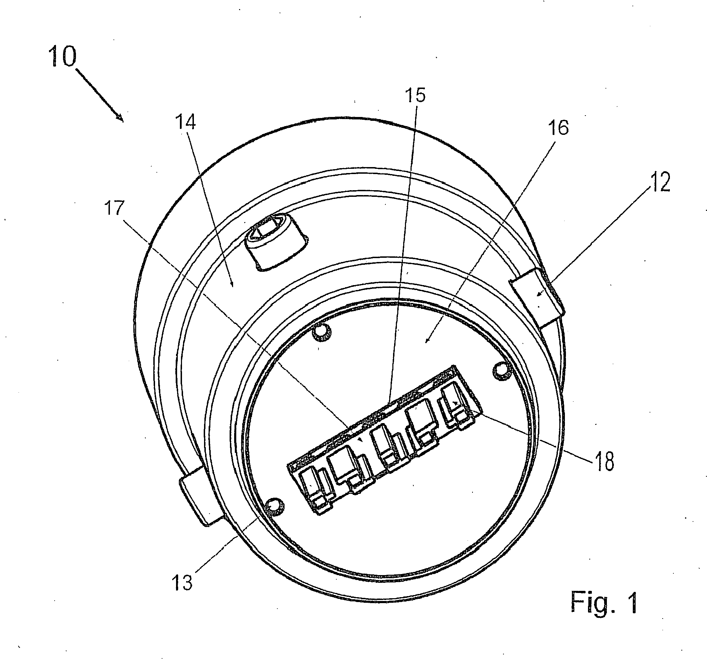

Fig. 1 zeigt einen Bajonettsockel 10 mit seitlich aus der Oberfläche herausstehenden Nocken 12. Die Nocken 12 befinden sich vorzugsweise an einem Nockenring 14. In dem Bajonettsockel 10 befindet sich eine Aufnahmeplatte 16. Die Aufnahmeplatte 16 enthält eine erste Kontaktleiste 17 mit darin angebrachten Steckkontakten 18. Die Aufnahmeplatte 16 kann mit entsprechenden Befestigungsmitteln über Öffnungen 13 am Bajonettsockel 10 befestigt werden. Die Kontaktleiste 17 ist in einer Ausführungsform entweder über eine Öffnung 15 in die Aufnahmeplatte 16 fest eingesetzt oder drehbar daran befestigt.

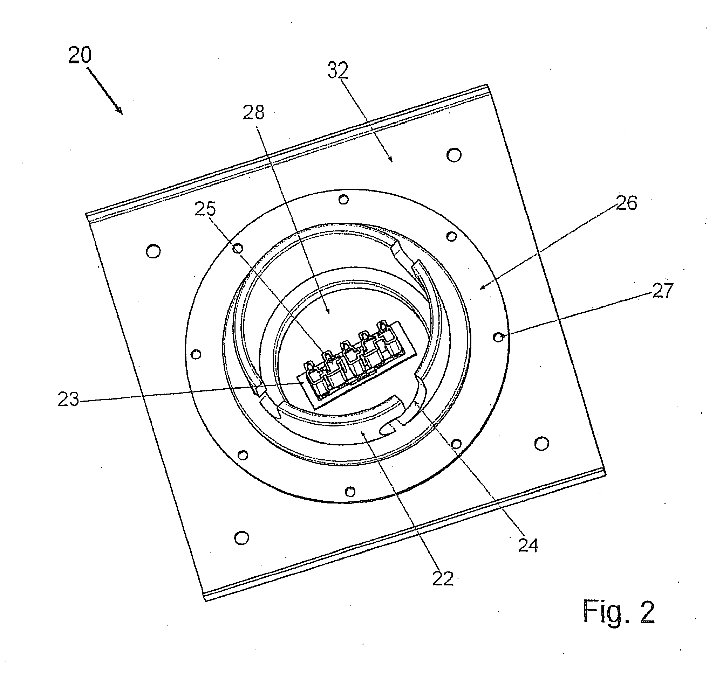

Fig. 2 zeigt einen Bajonettfuß 20 mit einer darin eingesetzten zweiten Kontaktleiste 23. Die zweite Kontaktleiste 23 besitzt Steckbuchsen 25, in welche die Steckkontakte 18 des Bajonettsockels 10 steckbar sind. Entweder die erste oder zweite Kontaktleiste 17, 23 wird beweglich gehalten. Alternativ können auch Drehkontakte zur Anwendung kommen. In diesem Fall sind die Kontaktleisten 17, 23 fest in der Aufnahmeplatte 16 eingesetzt.

Der Bajonettfuß 20 weist seitliche Führungsschlitze 24 auf. In diese Führungsschlitze 24 greifen die Nocken 12 des Bajonettsockels 10. Der Verschluß erfolgt durch leichtes Drehen des Bajonettfußes 20 und anschließendem Einrasten der Nocken 12 in das Ende der Führungsschlitze 24 des Bajonettfußes 20.

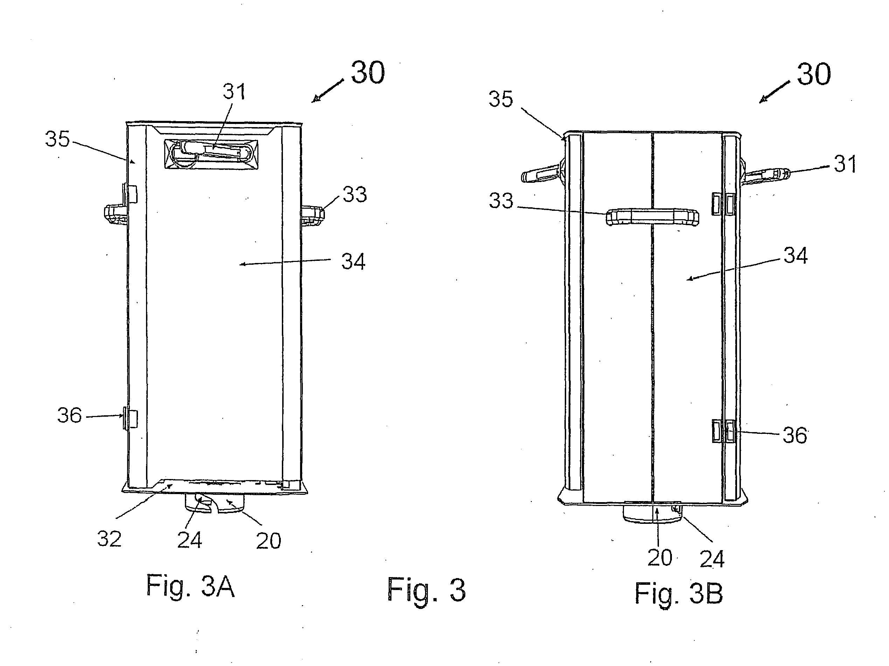

Der Bajonettfuß 20 kann über einen Montagering 26 an einer Bodenplatte 32 befestigt sein. Hierzu sind Öffnungen 27 vorgesehen. Die Kontaktleiste 23 ist entweder drehbar an einer Montageplatte 28 befestigt oder ist fest in dieser eingesetzt. Die Bodenplatte 32 kann beispielsweise das Unterteil einer Raumsäule 30 bilden (siehe Fig. 3).

Fig. 3 zeigt ein Anwendungsbeispiel des erfindungsgemäßes Bajonettverschlusses. Man erkennt den Bajonettfuß 20 mit den seitlichen Führungsschlitzen 24. Der Bajonettfuß 20 ist mit einer Bodenplatte 32 verbunden. Die Bodenplatte 32 bildet die Unterseite einer Raumsäule 30. An der Raumsäule 30 befinden sich Griffe 33, um ein Aufsetzen des Bajonettfußes 20 auf den Bajonettsockel 10 zu erleichtern. Um an die sich im Innenraum der Raumsäule 30 befindlichen Elektroinstallationsgeräte zu gelangen, ist vorzugsweise eine Tür 34 vorgesehen, die mit einem Schwenkgriff 31 verschließbar ist. Dazu besitzt die Raumsäule 30 seitlich am Gehäuse 35 angebrachte Scharniere 36.

## Patentansprüche

1. Bajonettverschluss mit Selbstkontaktierung, umfassend
- einen Bajonettsockel (10), bestehend aus
- einem Nockenring (14) mit seitlich herausstehenden Nocken (12), wobei die Nocken (12) in korrespondierende, seitlich angebrachte Führungsschlitze (24) eines Bajonettfußes (20) greifen,
- einer im Bajonettsockel (10) eingefassten Aufnahmeplatte (16),
- einen Bajonettfuß (20), bestehend aus
- einem Bajonettring (22) mit darin eingefassten seitlichen Führungsschlitzen (24), die zum Einrasten der Nocken (12) des Bajonettsockels (10) zunächst einen steilen und später in Richtung ihrer Erweiterung flachen Verlauf aufweisen,
**gekennzeichnet durch** die Merkmale:
- die Aufnahmeplatte (16) des Bajonettsockels (10) enthält eine erste Kontaktleiste (17) mit Steckkontakten (18),
- in dem Bajonettfuß (20) befindet sich eine zweite Kontaktleiste (23) mit Steckbuchsen (25),
- eine der beiden Kontaktleisten (17, 23) ist drehbar im Bajonettsockel (10) bzw. Bajonettfuß (20) eingefasst oder mit diesen fest verbunden, wobei dann entweder die erste Kontaktleiste (17) oder die zweite Kontaktleiste (23) mit drehbaren Steckkontakten (18, 25) versehen ist, so dass beim Aufsetzen des Bajonettfußes (20) auf den Bajonettsockel (10) ein elektrischer Drehkontakt entsteht.

2. Bajonettverschluss nach Anspruch 1, **gekennzeichnet durch** das Merkmal:
- am Bajonettsockel (10) sind drei zu einem gleichschenkligenen Dreieck angeordnete Nocken (12) ausgeformt.

3. Bajonettverschluss nach Anspruch 1 oder 2, **gekennzeichnet durch** das Merkmal:
- der Bajonettsockel (10) umfasst eine Bodenauslassdose.

4. Bajonettverschluss nach einem der vorhergehenden Ansprüche, **gekennzeichnet durch** die Merkmale:
- die Aufnahmeplatte (16) ist in den Bajonettsockel (10) eingefasst,
- die Kontaktleiste (17) ist in eine Öffnung (15) eingefasst.

5. Bajonettverschluss nach einem der vorhergehenden Ansprüche, **gekennzeichnet durch** das Merkmal:
- an der Kontaktleiste (17) befinden sich drehbare Steckkontakte (18).

6. Bajonettverschluss nach einem der vorhergehenden Ansprüche, **gekennzeichnet durch** das Merkmal:
- die Steckkontakte (18) sind mit Energie- und Datenversorgungsleitungen im Boden verbunden.

7. Bajonettverschluss nach einem der vorhergehenden Ansprüche, **gekennzeichnet durch** das Merkmal:
- die Kontaktleiste (17) ist drehbar auf der Aufnahmeplatte (16) befestigt.

8. Bajonettverschluss nach einem der vorhergehenden Ansprüche, **gekennzeichnet durch** das Merkmal:
- der Bajonettfuß (20) enthält einen Montagering (26) mit Befestigungslöchern (27).

9. Bajonettverschluss nach einem der vorhergehenden Ansprüche, **gekennzeichnet durch** das Merkmal:
- die zweite Kontaktleiste (23) ist in eine Montageplatte (28) eingefasst oder drehbar an dieser befestigt.

10. Bajonettverschluss nach einem der vorhergehenden Ansprüche, **gekennzeichnet durch** das Merkmal:
- die Steckbuchsen (25) der zweiten Kontaktleiste (23) sind drehbar.

11. Bajonettverschluss nach einem der vorhergehenden Ansprüche, **gekennzeichnet durch** das Merkmal:
- der Bajonettfuß (20) ist über einen Montagering (26) an einer Bodenplatte (32) befestigt oder wird von dieser ausgeformt.

12. Bajonettverschluss nach einem der vorhergehenden Ansprüche, **gekennzeichnet durch** die Merkmale:
- die Nocken (12) befinden sich am Bajonettfuß (20),
- die Führungsschlitze (24) befinden sich am Bajonettsockel (10).

13. Raumsäule, umfassend:
- ein Gehäuse (35),
- im Inneren des Gehäuses (35) angeordnete Elektroinstallationsgeräte,
- eine Bodenplatte (32) mit einem Bajonettfuß (20), **gekennzeichnet durch** die Merkmale:
- die Raumsäule besitzt einen Bajonettverschluss nach einem der Ansprüche 1 bis 22.

14. Raumsäule nach Anspruch 13, **gekennzeichnet durch** das Merkmal:
- an der Raumsäule (30) befindet sich eine Tür (34), die mit einem Schwenkgriff (31) über Scharniere (36) zu öffnen ist.

15. Raumsäule nach einem der vorhergehenden Ansprüche, **gekennzeichnet durch** das Merkmal:
- eine der beiden Kontaktleisten (17, 23) ist **durch** eine Feder in die Grundstellung verstellbar.
